# EUROPÄISCHE PATENTSCHRIFT

(11) **EP 2 986 187 B1**
(45) Veröffentlichungstag und Bekanntmachung des Hinweises auf die Patenterteilung: **23.08.2017**
(21) Anmeldenummer: 14719249.6
(22) Anmeldetag: 10.04.2014
(51) Int. Cl.: A47J 31/54

(54) **VERFAHREN ZUR STEUERUNG EINES HEISSGETRÄNKEZUBEREITUNGSGERÄTS**
METHOD FOR CONTROLLING A HOT DRINK PREPARATION DEVICE
PROCÉDÉ DE COMMANDE D'UN APPAREIL DE PRÉPARATION DE BOISSONS CHAUDES

(30) Priorität: 19.04.2013 DE 102013207182
(43) Veröffentlichungstag der Anmeldung: 24.02.2016
(73) Patentinhaber: BSH Hausgeräte GmbH, 81739 München (DE)
(72) Erfinder: BAUMGART, Stefan, 83308 Trostberg (DE); DABURGER, Josef, 83313 Siegsdorf-Hammer (DE); SCHNELLINGER, Christian, 83379 Wonneberg (DE); SCHOLZ, Florian, 83278 Traunstein (DE)
(86) Internationale Anmeldenummer: PCT/EP2014/057282
(87) Internationale Veröffentlichungsnummer: WO 2014/170208

(56) Entgegenhaltungen:
- EP-A1- 2 080 461
- WO-A1-95/16378
- DE-A1-102010 055 849
- DE-B3-102011 079 542

## Beschreibung

Die Erfindung betrifft ein Verfahren zur Steuerung eines Heißgetränkezubereitungsgeräts, insbesondere eines solchen für Haushaltszwecke, mit einer Heizung, mit einem Temperatursensor stromab der Heizung, mit einer Pumpe zum Fördern von Wasser innerhalb des Zubereitungsgeräts und mit einer Steuerungseinrichtung zur Steuerung der Heizung und der Pumpe. Als Heizung des Zubereitungsgeräts kann zum Beispiel ein Thermoblock, ein Durchlauferhitzer oder eine Kombination aus beiden eingesetzt werden. Die Pumpe kann bei aufwändigen Zubereitungsgeräten durch einen Wasseranschluss an das Haushaltswassernetz ersetzt sein und dadurch entfallen. Die Steuerungseinrichtung steuert die Heizung und die Pumpe, ggf. aber zeitweise auch nur eine von beiden. Dazu kann sie neben Benutzereingaben insbesondere Signale des Temperatursensors verarbeiten.

Aus der WO-A-95/16378 ist ein Verfahren zur Erkennung der Verkalkung von warmwassererzeugenden Geräten bekannt. Die DE-A-10 2010 055849 offenbart ein Verfahren zur Regeleung der Heißwasserzubereitung bei elektronischen Getränkezubereitungsmaschinen. Zubereitungsgeräte für Haushaltszwecke sollen besonders bedienerfreundlich, in ihren Abmessungen kompakt und möglichst preisgünstig sein. Um Kosten einzusparen, kann das Heißgetränkezubereitungsgerät ohne einen Durchflussmesser ausgebildet sein. Um dessen Funktion zu ersetzen, kann eine Steuerungseinrichtung ein Verfahren gemäß der Anmeldung Nummer DE 10 2011 079 542 B3 bzw. DE 10 2013 201 180 A1 des Anmelders durchführen.

Die EP-A-2 080 461 offenbart eine Vorrichtung, die ohne einen Durchflussmesser ausgebildet ist. Sie offenbart dazu ein Verfahren zur Ermittlung eines Verkalkungszustands in einem elektrischen Haushaltsgerät, das einen Flüssigkeitserhitzer und eine Regelungseinrichtung zur Regelung einer Heizleistung des Flüssigkeitserhitzers aufweist. Mit Entfall des Durchflussmessers sind allerdings herkömmliche Systemüberprüfungen hinsichtlich der Funktion einzelner Systembestandteile, insbesondere der Heizung und der Pumpe, nicht mehr möglich.

Aufgabe der Erfindung ist es daher, ein beschleunigtes Verfahren zur Steuerung eines Heißgetränkezubereitungsgeräts anzugeben, bei dem auch ohne Durchflussmesser eine aussagekräftige Systemüberprüfung durchgeführt werden kann.

Diese Aufgabe wird mit einem Verfahren zur Steuerung eines Heißgetränkezubereitungsgeräts gelöst, das sich in die folgenden Schritte untergliedert:
a) Beaufschlagen der Heizung mit elektrischer Leistung,
b) Erfassen einer Temperaturänderung stromab der Heizung nach Verstreichen einer definierten Zeitspanne,
c) Auswerten der erfassten Temperaturänderung durch Vergleichen mit einem vorgegebenen Zielwert, und
d) Ausgabe einer Fehlermeldung oder Fortsetzen des Brühvorgangs.

Das Verfahren wird im Zusammenhang mit und im Regelfall vor einem Brühvorgang durchgeführt. Dazu wird also zunächst die Heizung aktiviert. Anschließend wird eine gewisse Zeitspanne, nämlich ein definiertes Zeitintervall abgewartet. Es dient dazu, Totzeiten des Systems zu überwinden, innerhalb derer ohnehin mit keiner Reaktion gerechnet werden kann, insbesondere mit keiner Temperaturänderung am Temperatursensor. Die Dauer der Zeitspanne orientiert sich außerdem an den Trägheiten des Systems, beispielsweise derjenigen des Temperatursensor und der Heizung. Sie verstreicht, bis die Heizung auf die zugeführte elektrische Leistung mit einer Temperaturänderung reagiert. Die Trägheit der Heizung kann sich insbesondere durch Verkalkung vergrößern.

Nach Verstreichen des definierten Zeitintervalls wird in Schritt b) eine Temperaturänderung erfasst. Eine Temperaturänderung ist zu erwarten, wenn die Heizung mit Wasser gefüllt ist, sie und die Temperaturerfassung funktionieren. und die Heizung das Wasser in ihr erhitzt. Unter eine Temperaturänderung ist auch eine solche mit dem Wert 0 zu verstehen. Sie ergibt sich aus einer Differenz zweiter Messwerte. Die Messwerte kann der Temperatursensor stromab der Heizung vor dem ersten Verfahrensschritt a) und danach im Verfahrensschritt b) erfassen. Alternativ kann ein aktueller Messwert mit einem hinterlegten Zielwert von beispielsweise 60°C verglichen werden.

Der Betrag der Temperaturänderung wird in Schritt c) mit einem hinterlegten Zielwert verglichen, der einer Mindestleistung der Heizung entspricht. Liegt sie nicht vor, wird in Schritt d) eine Fehlermeldung ausgegeben. Die Ausgabe der Fehlermeldung muss nicht benutzerseitig erkennbar sein, sondern kann auch lediglich als Information in der Steuerungseinrichtung hinterlegt werden. Sie kann dazu führen, dass die Steuerungseinrichtung ein Verfahren zur Fehlerbeseitigung einleitet. Da eine ausbleibende Temperaturänderung in Schritt c) entweder an einem Defekt der Heizung oder aber daran liegen kann, dass die Heizung nicht mit Wasser gefüllt ist, oder sogar beide Umstände eintreten, kann ein Verfahren zur Fehlerbehebung den Fehler ggf. zumindest eingrenzen.

Die Erfindung wendet sich also mangels Durchflussmesser bzw. Flowmeter davon ab, eine Fehlerindikation unmittelbar an die Erfassung eines Durchflusses zu koppeln. Sie verfolgt vielmehr das Prinzip, die Heizung mit Energie zu beaufschlagen und eine daraus ggf. erfolgende Temperaturänderung zu analysieren. Dadurch wird es möglich, trotz Entfall eines Durchflussmessers Funktionsüberprüfungen durchzuführen und so die Funktion und Betriebssicherheit des Heißgetränkezubereitungsgeräts sicherzustellen.

Im Schritt a) wird die Heizung mit einer elektrischen Leistung beaufschlagt, die zum Erhitzen von Wasser führen soll. Je nach verfügbarer Zeit dafür kann die Dauer der Leistungseinleitung und/oder ihre Höhe variiert werden. Erfindungsgemäß entspricht die elektrische Leistung in Schritt a) einem vorbestimmten und standardisierten Energiebetrag, der dem-entsprechend einem vorherbestimmten Zielwert gemäß Schritt c) für eine zu erwartende Temperaturänderung entspricht. Der erfindungsgemäße vorbestimmte Energieblock bestimmt sich folglich durch eine festgelegte elektrische Leistung, die während einer ebenso festgelegten Zeitspanne angelegt wird. Er errechnet sich aus der zu erhitzenden Masse der Heizung und der zu erhitzenden Masse des Wassers sowie einer angestrebten Temperaturerhöhung des in der Heizung befindlichen Wassers. Bei im Übrigen unveränderten Werten für die Heizung entspricht dem Energieblock eine definierte Temperaturerhöhung. Sie kann in geringen Grenzen durch Fertigungstoleranzen der Heizung, in größeren Grenzen dagegen durch den Verkalkungsgrad der Heizung variieren. Diese möglichen und die maximal zulässigen Schwankungsbreiten lassen sich jedoch ebenfalls vorab definieren und bei der Auswertung der erfassten Temperaturänderung berücksichtigen. Durch das Festlegen eines Energieblocks und eines zugehörigen Zielwerts für die Temperaturänderung lässt sich die Auswertung der erfassten Temperaturänderung im Schritt c) vereinfachen und das Verfahren dadurch beschleunigen.

In dem bislang geschilderten Überprüfungsverfahren können also - unter der Voraussetzung einer intakten Temperaturerfassung - jedenfalls zwei unabhängige Fehler aufgetreten sein, nämlich dass entweder die Heizung nicht funktioniert oder die Heizung nicht mit Wasser gefüllt ist ("Trockenhochlauf'). Eine erste Möglichkeit der Fehlerbehebung kann also darin bestehen, die ggf. leere, aber funktionierende Heizung mit Wasser zu befüllen. Nach einer weiteren vorteilhaften Ausgestaltung der Erfindung kann daher an die Fehlermeldung in Schritt d) das oben genannte Verfahren erneut durchlaufen werden, wobei zusätzlich im Schritt a) die Pumpe aktiviert wird, um die Heizung zu befüllen bzw. zu entlüften.

Das Aktivieren der Pumpe steht insofern in einem unmittelbaren zeitlichen Zusammenhang mit dem Schritt a), als es grundsätzlich während der Aktivierung der Heizung erfolgt. Nach einer einfachen Ausführungsform werden die Heizung und die Pumpe gleichzeitig angesteuert bzw. aktiviert. Alternativ kann es sinnvoll sein, die Pumpe geringfügig vorher zu aktivieren, beispielsweise bis zu 10 Sekunden vorher, damit die Heizung zu ihrem Aktivierungszeitpunkt auch zuverlässig befüllt ist. Ein gewisser Zeitvorlauf von oben genannten 10 Sekunden kann durch eine Leitungslänge zwischen Pumpe und Heizung oder einer Trägheit der Pumpe bedingt sein. Nach einer weiteren Alternative kann die Pumpe allerdings auch später als die Heizung eingeschaltet werden, nämlich wenn die Heizung eine gewisse Trägheit aufweist.

Nach dem Aktivieren der Pumpe jedenfalls können sich die bereits oben beschriebenen weiteren Schritte der Systemüberprüfung anschließen, nämlich der Schritt b), wonach nach Verstreichen einer definierten Zeitspanne eine Temperaturänderung erfasst wird. Anschließend wird in Schritt c) die Temperaturänderung ausgewertet und in Schritt d) eine entsprechende Ausgabe einer Fehlermeldung hervorgerufen oder der Brühvorgang fortgesetzt.

Da in Schritt a) zusätzlich die Pumpe aktiviert wird, wird die Heizung während des Verstreichens der definierten Zeitspanne im Schritt b) von Wasser durchströmt. Demzufolge ist bei Aktivieren der Pumpe in Schritt a) gegebenenfalls ein Energieblock anzusetzen, der eine höhere elektrische Leistung und/oder ein längeres Zeitintervall umfasst, um das Fließen des Wassers in der Heizung zu berücksichtigen. Alternativ kann bei Verwendung des immer gleichen Energieblocks ein geringerer Zielwert angesetzt werden, sobald im Schritt a) die Pumpe aktiviert wird.

Gemäß dem obigen Schritt a) kann der Temperatursensor die Temperatur des Wassers stromab der Heizung vor dem ersten Verfahrensschritt a) und danach im Verfahrensschritt b) erfassen. Alternativ kann ein zweiter Temperatursensor stromauf der Heizung angeordnet sein und im Verfahrensschritt b) stromauf der Heizung einen ersten und der Temperatursensor stromab der Heizung den zweiten Messwert erfassen. Bei nur einem Temperatursensor wird folglich vor dem Einschalten der Heizung und nach Ablauf der Zeitspanne im Schritt b) die Temperatur gemessen. Mit zwei Temperatursensoren kann gleichzeitig eine Temperatur stromauf und eine Temperatur stromab der Heizung gemessen werden, uns zwar weitgehend gleichzeitig nach Verstreichen des definierten Zeitintervalls in Schritt b).

Ergibt die Auswertung der Temperaturänderung in Schritt c) bei eingeschalteter Pumpe den gewünschten Zielwert, so ist die Heizung erfolgreich auf ihre Funktion hin überprüft. Die Fehlermeldung, die die Funktionsüberprüfung ohne Einschalten der Pumpe ergeben hat, beruhte also auf einer wasserfreien Heizung, einem sog. Trockenhochlauf. Bei erfolgreichem Abschluss des zweiten Überprüfungsschritts ist die Heizung also entlüftet und zur Zubereitung eines Getränks bereit.

Sollte dagegen die gewünschte Temperaturänderung nicht erfasst werden können, kann wiederum eine Fehlermeldung generiert werden. Bei dieser Fehlermeldung kann jedoch nicht ausgeschlossen werden, dass der Fehler in der Funktion der Heizung oder der Pumpe liegt.

Das zuletzt beschriebene Verfahren mit den Schritten a) bis d) einschließlich der Aktivierung der Pumpe im Schritt a) ist nicht zwingend auf eine Funktionsüberprüfung ohne Einschalten der Pumpe angewiesen. Es kann als Verfahren zum Befüllen bzw. Entlüften der Heizung auch unabhängig davon durchgeführt werden.

Ist das System auf die Funktion der Heizung und der Pumpe hin überprüft und die Heizung entlüftet, kann in einem weiteren Verfahren die Heizung gezielt abgekühlt werden. Dieses Verfahren schließt sich zwingend an das Befüllen bzw. Entlüften an und umfasst die folgenden Schritte:
k) Stromlosschalten der Heizung bei aktivierter Pumpe,
l) Erfassen einer Temperaturänderung stromab der Heizung nach Verstreichen einer definierten Zeitspanne,
m) Auswerten der erfassten Temperaturänderung durch Vergleichen mit einem Zielwert, und
n) Ausgabe einer Fehlermeldung oder Fortsetzen eines Brühvorgangs.

Beim Abkühlen der Heizung ist eine Energiezufuhr nicht angebracht. Ein Abschalten bzw. Stromlosschalten gemäß Schritt k) kann entfallen, wenn sie mittels eines definierten Energieblocks aufgeheizt wurde, die Leistungszufuhr also zeitlich beschränkt war. Gleichzeitig jedoch ist jedenfalls die Pumpe aktiviert, so dass noch nicht erhitztes Wasser in die Heizung geleitet wird. Auch im anschließenden Schritt l) wird eine definierte Zeitspanne von beispielsweise 14 Sekunden abgewartet, um danach eine Temperaturänderung erfassen zu können. Auch ihr ist ein Zielwert zugeordnet, mit dem sie verglichen wird, um aus dem Vergleich eine Auswertung hinsichtlich Funktionieren oder Fehlermeldung gemäß Schritt m) vorzunehmen. Um die Zeitspanne für dieses Verfahren zu verkürzen, kann die Pumpengeschwindigkeit erhöht werden. Stellt sich die gewünschte Temperaturänderung ein, kann mit dem Brühvorgang begonnen bzw. kann er fortgesetzt werden. Liegt dagegen keine oder keine ausreichende Temperaturänderung vor, wird eine Fehlermeldung ausgegeben. Da in dem Verfahren zum Abkühlen die Heizung nicht mit Leistung beaufschlagt wurde, kann der Fehler auf einen Defekt im Wasser führenden System hindeuten, beispielsweise auf einen Defekt der Pumpe, auf eine Blockade in einer Leitung oder auf einen leeren Wassertank.

Nach einer weiteren vorteilhaften Ausgestaltung der Erfindung kann bei Ausgabe einer Fehlermeldung im Schritt d) und/oder im Schritt n) eine Fehlerinformation in einem nichtflüchtigen Speicher im Zubereitungsgerät abgelegt werden. Damit kann ein Systemzustand aus einem vorangegangenen Verfahren über dessen Laufzeit hinaus gespeichert und in ein anschließendes Verfahren übertragen werden. Das Abspeichern der Fehlerinformation ist als Setzen eines "Flag" bekannt, womit eine binäre Variable oder ein Statusindikator bezeichnet wird, der als Hilfsmittel zur Kennzeichnung bestimmter Zustände eingesetzt wird. In einem einfachen Fall enthält sie lediglich die Information, ob ein Fehler vorlag (0/1). In einer aufwändigeren Ausführungsform kann sie zusätzlich Informationen über den Fehler an sich enthalten. Das Flag kann insbesondere dazu benutzt werden, der Steuerungseinrichtung nach einem Neustart eine Information zu übermitteln, ob die Zubereitungseinrichtung bei der letzten Benutzung ordnungsgemäß und fehlerfrei abgeschaltet werden konnte. Ist beispielsweise die Heizung gefüllt, kann eine Funktionsüberprüfung mittels Trockenhochlaufs ausgelassen werden. Alternativ oder zusätzlich kann das Flag verwendet werden, um die Zubereitungseinrichtung bei der erstmaligne Inbetriebnahme des Benutzers selbsttätig mit dem Befüllen bzw. Entlüften starten zu lassen. Nach erfolgreicher Durchführung des Befüllens bzw. Entlüftens wird das Flag gelöscht.

Nach einer weiteren vorteilhaften Ausgestaltung der Erfindung wird laufend oder in kurzen Zeitintervallen die aktuelle Wassertemperatur erfasst und der Messwert der Temperatur mit einem definierten Grenzwert verglichen. Bei Überschreiten des Grenzwerts wird eine benutzerseitig nicht wahrnehmbare Fehlermeldung an die Steuerungseinrichtung ausgegeben und das Heizsystem abgeschaltet. Ggf. kann zusätzlich die Heizung automatisch abgekühlt das Programms bei Erreichen eines Schwellwerts fortgesetzt werden. Alternativ zur laufenden Überwachung kann sie in kurzen Zeitintervallen erfolgen, deren Dauer kürzer ist als die Totzeit einer Regelstrecke des Zubreitungsgeräts. Dazu zählt beispielsweise die Reaktionszeit der Heizung vom ersten Impuls zum Aufheizen bis zu einer messbaren Temperaturänderung. Eine Totzeit kann beispielsweise einen Zeitraum von 6 Sekunden umfassen.

Bei einer weiteren vorteilhaften Ausgestaltung des vorgenannten Verfahrens kann bei Überschreiten des Grenzwerts um einen vorbestimmten Betrag das Zubereitungsgerät komplett gesperrt werden. Bei einer Sperrung wird das Zubereitungsgerät zwar nicht von seiner Stromversorgung getrennt, aber in einen "Fehlermodus" versetzt, in dem der Getränkezubereitungsvorgang nicht mehr fortsetzbar ist, sondern abgebrochen wird. Der Benutzer wird aufgefordert, das Zubereitungsgerät zumindest auszuschalten. Nach einem erneuten Einschalten startet das Zubereitungsgerät die Systemüberprüfung nach den Schritten a) bis d) von sich aus erneut. Bei Überschreiten des Grenzwerts wird folglich zusätzlich der Betrag erfasst, um den der Messwert über dem Grenzwert liegt. Alternativ kann ein zweiter Grenzwert definiert sein, der über dem ersten Grenzwert liegt. Damit kann ein kritischer Fehler detektiert werden, der anderenfalls bei einem erneuten Starten des Zubereitungsgeräts oder Fortsetzen des Zubereitungsvorgangs eine Gefahr für den Benutzer darstellen könnte. Sollte auch die erneute Systemüberprüfung erfolglos sein, lässt sich die Heizeinrichtung benutzerseitig nicht mehr aktivieren, sondern nur noch durch einen autorisierten Fachmann. Dadurch lässt sich die Bedienungssicherheit der Getränkezubereitungseinrichtung steigern.

Das Prinzip der Erfindung wird im Folgenden anhand einer Zeichnung beispielshalber noch näher erläutert. In der Zeichnung zeigen:
- Figur 1:: eine schematische Darstellung einer erfindungsgemäßen Kaffeemaschine,
- Figur 2:: ein Blockschaltbild für Funktionsüberprüfungen,
- Figur 3:: ein Blockschaltbild für eine laufende Temperaturüberwachung,
- Figuren 4 bis 6:: beispielhafte Temperaturverläufe für einzelne Verfahrensabschnitte.

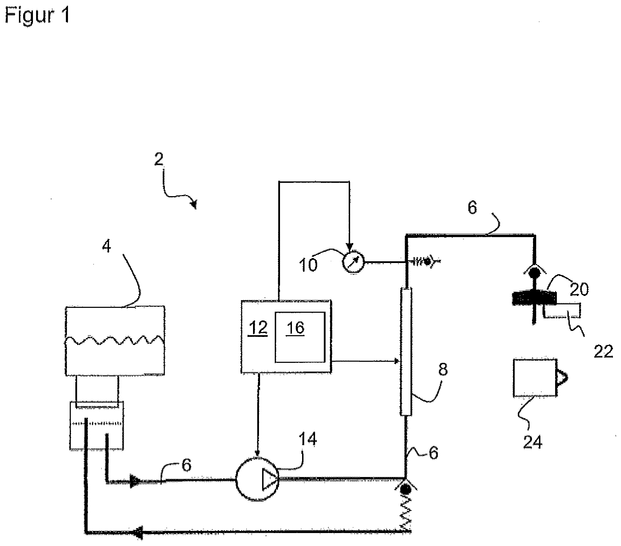

Figur 1 zeigt schematisch eine Kaffeemaschine 2 als Heißgetränkemaschine, die die Zubereitung von unterschiedlichen Kaffeegetränken unter Verwendung von Getränkekapseln 22 erlaubt. Sie weist einen Frischwassertank 4 auf, der mit einem Flüssigkeitszulauf 6 verbunden ist. Im Wasserzulauf 6 ist eine Schwingkolbenpumpe 14 angeordnet, mit der Wasser mit einer einstellbaren Förderrate aus dem Tank 4 gefördert werden kann. Der Wasserzulauf 6 verläuft von der Schwingkolbenpumpe 14 weiter bis zu einer Heizung 8, die als massearmer Durchlauferhitzer ausgebildet ist. Stromab der Heizung 8 ist ein Temperatursensor 10 angeordnet, mit dem dort die Temperatur des Wassers gemessen werden kann. Der Wasserzulauf 6 erstreckt sich weiter bis zu einer Brühkammer 20. Dort gelangt das aufgeheizte Wasser in die Getränkekapsel 22, die das aufgeheizte Wasser durchströmt und dabei Aromastoffe aufnimmt, um sich dann als fertiges Kaffeegetränk sich in einer Tasse 24 zu sammeln.

Die Kaffeemaschine 2 weist eine Steuerungseinrichtung 12 auf, die über Signalleitungen mit der Pumpe 14, mit der Heizung 8 und mit dem Temperatursensor 10 verbunden ist, von denen sie Messwerte erhält und an die sie Steuersignale abgeben kann. Sie umfasst außerdem einen nichtflüchtigen Speicher 16, in dem Werte hinterlegt, ausgelesen und gelöscht werden können. Damit ist die Steuerungseinrichtung 12 in der Lage, in der in der DE 10 2011 079 542 B3 und der DE 10 2013 201 180 beschriebenen Weise einen Durchfluss bzw. eine Volumenstrom von Wasser stromab des Durchlauferhitzers 8 zu bestimmen.

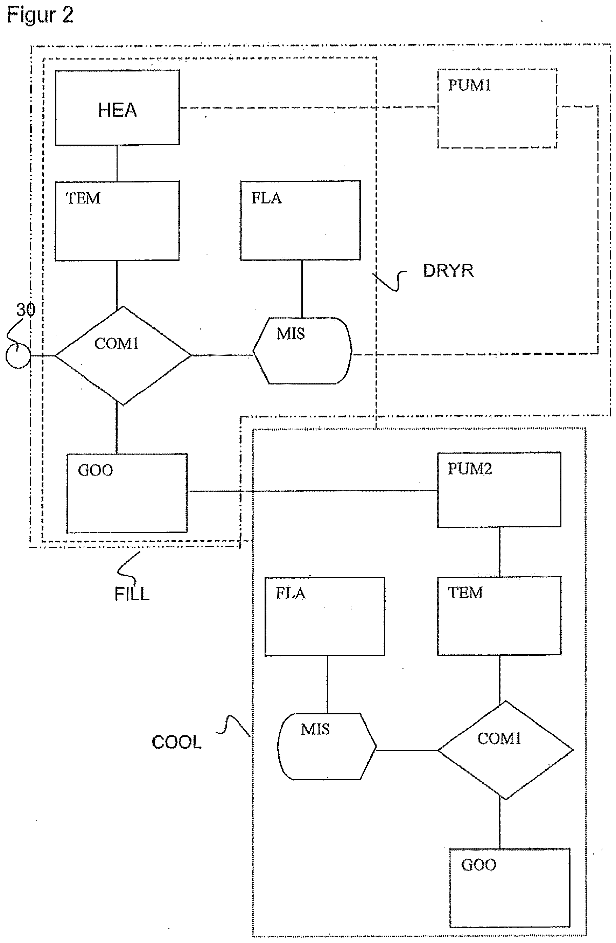

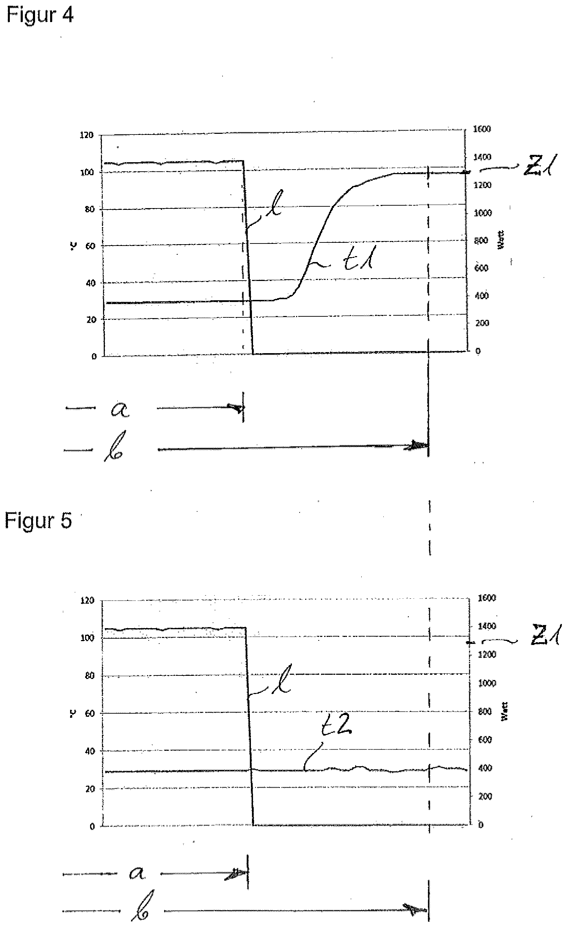

Figur 2 zeigt einen mehrstufigen Ablauf einer Funktionsüberprüfung, in dessen Folge sowohl die Heizung 8 als auch die Pumpe 14 auf ihre Funktion hin überprüft werden. In einem ersten Verfahrensabschnitt DRYR, einem potentiellen sog. Trockenhochlauf, wird in einem Schritt HEA die Heizung 8 der Kaffeemaschine 2 mit einem sog. Energieblock beaufschlagt. Ein beispielhafter Energieblock hat eine definierte Größe an Heizenergie von 1400 W während eines definierten Zeitintervalls a von 20 Sekunden. Er errechnet sich aus der zu erhitzenden Masse der Heizung 8, der Masse des darin befindlichen Wassers und einer angestrebten Temperaturerhöhung des Wassers auf ca. 90°C, eine so genannte Sprungantwort. Einen daraus abgeleiteten Temperatur- und Heizleistungsverlauf zeigt Figur 4. Für das Zeitintervall a liegt die elektrische Leistung von 1400 W an der Heizung 8 an, die anschließend ausgeschaltet wird. Daraus ergibt sich der Leistungsverlauf l. Die Temperatur des Wassers, die aufgrund vorangegangener Zubereitungsvorgänge gemäß Figur 4 schon bei 30°C liegt, sollte sich infolge der eingeschalteten Heizung 8 mit einer gewissen Zeitverzögerung auf etwa 90°C erhitzen, sodass sich der Temperaturverlauf t1 ergibt. Bei einem massearmen Durchlauferhitzer als Heizung 8 kann der Energieblock aufgrund der geringeren Masse des Durchlauferhitzers kleiner ausfallen als beispielsweise bei einem Thermoblock. Der angestrebte Temperaturwert des Wassers von 90°C entspricht einem Zielwert z1, der in der Steuereinrichtung 12 der Kaffeemaschine 2 bzw. in deren nichtflüchtigen Speicher 16 abgespeichert ist.

Eine definierte Zeitspanne b bestimmt eine weitere Zeitdauer, nach der eine Temperaturerfassung in Schritt TEM (s. Figur 2) erfolgt. Die definierte Zeitspanne b ist größer oder gleich dem Zeitintervall a. Nach Ablauf der definierten Zeitspanne b wird jedenfalls stromab der Heizung 8 die dort vorliegende Temperatur erfasst. Der gemessene Wert wird in einem Schritt COM1 mit dem hinterlegten Zielwert z1 verglichen. Bei voller Funktionsfähigkeit der Kaffeemaschine 2 ergibt sich ein Temperaturverlauf t1 gemäß Figur 4, so dass der Messwert aus Schritt TEM dem hinterlegten Zielwert z1 entspricht. Damit kann ggf. im Schritt GOO mit dem Brühvorgang fortgefahren werden.

Ergibt der Vergleich im Schritt COM1 jedoch keine Übereinstimmung des Messwerts mit dem hinterlegten Zielwert, liegt ein Fehler vor, der in Schritt MIS signalisiert wird. Den zugehörigen Temperaturverlauf t2 bei gleichem Leistungsverlauf l zeigt Figur 5: nach Ende des Energieblocks zeigt der Temperaturverlauf t2 keine Änderung, der Zielwert wird also nicht erreicht. Daraufhin wird im nichtflüchtigen Speicher 16 der Steuerungseinrichtung 12 im Schritt FLA ein Flag gesetzt. Es zeigt an, dass der erste Überprüfungsschritt zu einem Fehler geführt hat, der noch nicht weiter identifiziert wurde. Sollte daraufhin die Kaffeemaschine 2 ausgeschaltet werden, bleibt die Fehlerinformation gleichwohl erhalten, so dass die Steuerungseinrichtung 12 nach erneutem Einschalten der Kaffeemaschine 2 auf die hinterlegte Information zurückgreifen kann und ein entsprechendes Verfahren anschließen kann.

Der in Schritt MIS detektierte Fehler kann verschiedene Ursachen haben. Er kann beispielsweise darauf beruhen, dass der Temperatursensor 10 ausgefallen ist oder die Heizung 8 nicht funktioniert. In einem einfachen und am häufigsten auftretenden Fall kann er jedoch darauf beruhen, dass die Heizung 8 nicht mit Wasser befüllt ist, so dass sie die Energie des Energieblocks nicht ans Wasser abgeben und daraufhin keine Sprungantwort am Temperatursensor 10 verursachen konnte. Um diese Möglichkeit auszuschließen, kann nach Auftreten des Fehlers in Schritt MIS ein weiterer Verfahrensabschnitt FILL (vgl. Figur 2) zum Befüllen bzw. Entlüften der Heizung 8 durchgeführt werden. Dazu wird in einem Schritt PUM1 die Pumpe 14 aktiviert, während die Heizung 8 mit dem Energieblock beaufschlagt wird. Damit wird ein Befüllen bzw. Entlüften der Heizung 8 sichergestellt, sofern die Pumpe 14 wunschgemäß arbeitet. Anschließend werden die Verfahrensschritte TEM, COM1, GOO bzw. MIS und FLA weitgehend unverändert durchlaufen mit der Maßgabe, dass der hinterlegte Zielwert der Sprungantwort geringer ausfallen muss, weil nun die Heizung 8 durchströmt wird und damit keine Sprungantwort gleicher Höhe erwartet werden kann, wie bei in der Heizung 8 stehendem Wasser.

Ergibt sich also als Ergebnis des Schritts COM1 die gewünschte Sprungantwort, so liegt ein Temperaturverlauf t1 vor und es kann im Schritt GOO wiederum mit dem Brühvorgang fortgefahren werden und das gesetzte Flag aus dem Schritt FLA gelöscht werden. Anderenfalls erfolgt eine Fehlerausgabe in Schritt MIS und das Setzen eines neuen Flags in Schritt FLA. Anschließend kann das Zubereitungsgerät gesperrt oder eine Fehlerbehebung oder Fehlereingrenzung unternommen werden, z.B. durch die Aufforderung an den Benutzer, den Wassertank zu überprüfen und ggf. zu füllen, oder es kann die Pumpe eingeschaltet werden, um Wasser in Heizung zu fördern. Nach einer Fehlerbehebung oder Fehlereingrenzung schießt sich erneut der Verfahrensabschnitt FILL zum Befüllen bzw. Entlüften der Heizung 8 an.

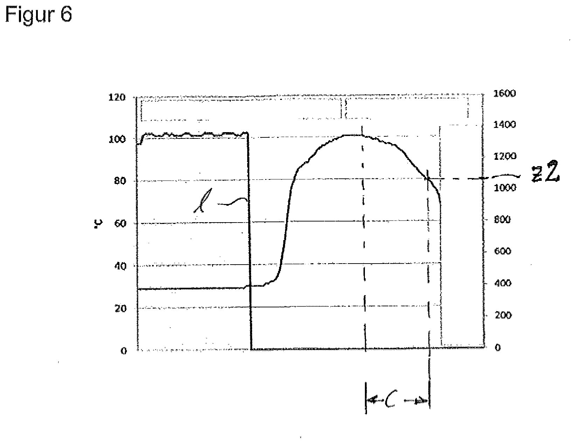

Ohne Fehlermeldung kann sich anschließend an das erfolgreiche Entlüften bzw. Befüllen der Heizung ein weiterer Verfahrensabschnitt COOL (vgl. Figur 2) zur Funktionsüberprüfung anschließen, nämlich ein gezieltes Abkühlen der Heizung 8. Dazu wird die Heizung 8 stromlos geschaltet bzw. nach Abschluss des Energieblocks stromlos gelassen, während die Pumpe 14 aktiviert wird bzw. bleibt (vgl. Schritt PUM2). Auch dieses Verfahren verfolgt das gleiche Prinzip wie das vorherige, nämlich dass nach Ablauf einer definierten Zeitspanne in einem anschließenden Schritt TEM eine Temperatur stromab der Heizung 8 erfasst wird. Figur 6 zeigt einen Temperaturverlauf t3 einer kompletten Funktionsüberprüfung, der sich bei korrekter Funktion der Pumpe 14 und der Heizung ergibt. In Anschluss an die Zeitspanne b, also bei korrekter Funktion der Pumpe 14 und bei inzwischen ausgeschalteter Heizung 8, sinkt die Temperatur. Die jetzt betrachtete Zeitspanne der Aktivität der Pumpe 14 ist mit c bezeichnet und beträgt ca. 10 Sekunden. Während dessen ist ein Temperaturunterschied von mind. 20°C zu erreichen. Der nach Verstreichen der Zeitspanne c erfasste Messwert z2 wird im Schritt COM1 mit einem aus dem geplanten Temperaturunterschied errechneten Zielwert verglichen. Wird er erreicht, kann von einem Temperaturverlauf t3 gemäß Figur 6 ausgegangen, ggf. das Flag gelöscht und der Brühvorgang in Schritt GOO fortgesetzt werden.

Wird der Zielwert z2 dagegen nicht erreicht, wird in Schritt MIS wiederum eine Fehlermeldung ausgelöst, begleitet vom Setzen eines Flags gemäß Schritt FLA, die eine entsprechende Information im Speicher 16 der Steuerungseinrichtung 12 hinterlegt. Anschließend kann - analog zur obigen Vorgehensweise - das Zubereitungsgerät gesperrt oder eine Fehlerbehebung oder Fehlereingrenzung unternommen werden, z.B. durch ein verstärktes Pumpen, um eine Abkühlung zu erreichen. Nach einer Fehlerbehebung oder Fehlereingrenzung schießt sich erneut der Verfahrensabschnitt COOL zum Abkühlen der Heizung 8 an.

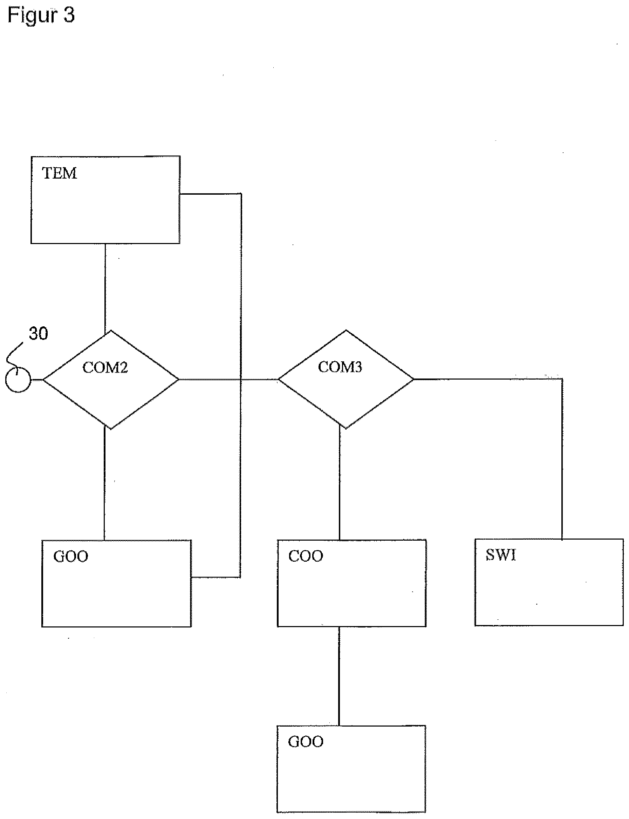

Figur 3 zeigt ein weiteres Überprüfungsverfahren, das sowohl während der Funktionsüberprüfungen gemäß Figur 2 als auch während eines anschließenden herkömmlichen Brühvorgangs durchgeführt wird. Demgemäß wird in kurzen Intervallen eine Temperaturerfassung gemäß Schritt TEM durchgeführt. In einem anschließenden Schritt COM2 wird der erfasste Wert mit hinterlegten Zielwerten verglichen, die für die jeweiligen Verfahren bzw. Betriebszustände der Kaffeemaschine 2 werkseitig erfasst und in ihrem Speicher 16 hinterlegt wurden. Wird der Grenzwert eingehalten, so wird in Schritt GOO der Brühvorgang unverändert fortgesetzt und zum Schritt TEM zurückgekehrt. Sollte jedoch im Schritt COM2 der Grenzwert überschritten worden sein, so wird in einem anschließenden Schritt COM3 überprüft, um welchen Betrag der Grenzwert überschritten wurde. Damit wird zwischen unkritischen Fehlern einerseits und kritischen Fehlern andererseits unterschieden. Sollte nämlich der Betrag der Überschreitung innerhalb eines definierten Intervalls liegen, wird in einem Schritt COO die Heizung 8 abgeschaltet und durch Vermittlung der Steuerungseinrichtung 12 abgekühlt, bis sie den kritischen Grenzwert unterschreitet, und anschließend die Brühung im Schritt GOO unverändert fortgesetzt. Die für die Systemprüfung geförderte Wassermenge wird erfasst und ggf. zwischengespeichert, um sie bei der anschließenden Zubereitung des Getränks in Abzug zu bringen. Damit wird die korrekte Gertränkemenge in der Tasse zu erhalten.

Sollte im Schritt COM3 dagegen das Intervall überschritten werden, so wird im anschließenden Schritt SWI ein kritischer Fehler detektiert, bei dem die Heizung 8 ebenfalls abgeschaltet wird, allerdings ohne dass sie durch den Benutzer erneut aktiviert werden kann. Auch die Kaffeemaschine 2 wird abgeschaltet und ein Flag gesetzt, das auf den kritischen Fehler hinweist. Jetzt kann die Kaffeemaschine 2 nur noch von einem Fachmann betätigt werden, um sie zu reparieren.

Das Verfahren gemäß Figur 3 läuft kontinuierlich oder in kurzen Intervallen zwischen den Schritten GOO und TEM ab. Die Intervalle sind kleiner als eine Totzeit der Regelstrecke zwischen der Heizung 8 und dem Temperatursensor 10 bemessen und dauern z.B. 6 Sekunden. Läuft das Verfahren zugleich mit einem der Verfahren nach Figur 2 ab, kann es sich mit dem dortigen Verfahrensschritt TEM insofern überlagern, als es den darin ermittelten Messwert übernimmt. Es schießt dann am Koppelungspunkt 30 mit seinen Schritt COM2 an.

### Bezugszeichenliste

- HEA: Energieblock in Heizung laden
- TEM: Temperaturerfassung
- COM1: Vergleich mit Zielwert
- COM2: Vergleich mit einem Grenzwert
- COM3: Vergleich der Überschreitung mit einem Zielwert
- GOO: Fortsetzen des Brühvorgangs
- MIS: Fehlermeldung
- FLA: Setzen eines Flags
- PUM: Pumpe aktivieren
- COO: Abkühlvorgang
- SWI: System abschalten

- DRYR: Überprüfungsverfahren Trockenhochlauf
- FILL: Überprüfungsverfahren System Befüllen/Entlüften
- COOL: Überprüfungsverfahren Abkühlen

- 2: Kaffeemaschine
- 4: Wassertank
- 6: Wasserzulauf
- 8: Heizung
- 10: Temperatursensor
- 12: Steuerungseinrichtung
- 14: Pumpe
- 16: Speicher
- 20: Brühkammer
- 22: Getränkekapsel
- 24: Tasse
- 30: Koppelungspunkt

## Patentansprüche

1. Verfahren zur Steuerung eines Heißgetränkezubereitungsgeräts (2), insbesondere ein solches für Haushaltszwecke, mit einer Heizung (8), mit wenigstens einem Temperatursensor (10) stromab der Heizung (8), mit einer Pumpe (14) zum Fördern von Wasser innerhalb des Zubereitungsgeräts (2), mit einer Steuereinrichtung (12) zur Steuerung der Heizung (8) und der Pumpe (8), mit den folgenden Schritten:
a) Beaufschlagen der Heizung (8) mit elektrischer Leistung,
b) Erfassen einer Temperaturänderung stromab der Heizung (8) nach Verstreichen einer definierten Zeitspanne (b),
c) Auswerten der erfassten Temperaturänderung durch Vergleich mit einem Zielwert (z1),
d) Ausgabe einer Fehlermeldung oder Fortsetzen/Einleiten des Brühvorgangs,
**dadurch gekennzeichnet, dass** die während einer festgelegten Zeitspanne angelegte festgelegte elektrische Leistung in Schritt a) einem vorbestimmten Energieblock entspricht, der einem bestimmten Zielwert (z1) gemäß Schritt c) für eine Temperaturänderung entspricht.

2. Verfahren nach Anspruch 1, **dadurch gekennzeichnet**, däss zum Befüllen bzw. Entlüften der Heizung (8) in Schritt a) die Pumpe (14) aktiviert wird.

3. Verfahren nach Anspruch 1, **dadurch gekennzeichnet, dass** nach Ausgabe einer Fehlermeldung in Schritt d) ein Verfahren zum Befüllen/Entlüften (FILL) der Heizung (8) gemäß Anspruch 2 eingeleitet wird.

4. Verfahren nach Anspruch 2 oder 3, **dadurch gekennzeichnet, dass** nach dem Verfahren zum Befüllen/Entlüften (FILL) der Heizung (8) gemäß Anspruch 3 ein Verfahren zum Abkühlen (COOL) der Heizung (8) mit den folgenden Schritten durchgeführt wird:
k) Stromlosschalten der Heizung (8),
l) Erfassen einer Temperaturänderung stromab der Heizung (8) nach Verstreichen einer definierten Zeitspanne (c),
m) Auswerten der erfassten Temperaturänderung durch Vergleich mit einem Zielwert,
n) Ausgabe einer Fehlermeldung oder Fortsetzen/Einleiten des Brühvorgangs.

5. Verfahren nach Anspruch 4, **dadurch gekennzeichnet, dass** während des stromlosen Betriebs der Heizung (8) in Schritt k) die Leistung der Pumpe (14) verändert wird.

6. Verfahren nach einem der obigen Ansprüche, **dadurch gekennzeichnet, dass** zur Fehlermeldung in Schritt d) und/oder in Schritt n) zusätzlich eine Information darüber in einem nichtflüchtigen Speicher (16) der Zubereitungseinrichtung (2) abgespeichert wird, auf die zu Beginn eines weiteren Verfahrens zugegriffen wird.

7. Verfahren nach einem der obigen Ansprüche, **dadurch gekennzeichnet, dass** laufend oder in kurzen Intervallen die aktuelle Wassertemperatur erfasst wird und der Wert der Temperatur mit einem definierten Grenzwert verglichen wird und bei Überschreitung des Grenzwerts eine Störungsmeldung ausgegeben und die Heizung abgeschaltet wird.

8. Verfahren nach dem obigen Anspruch 7, **dadurch gekennzeichnet, dass** bei Überschreiten des Grenzwerts um einen vorbestimmten Betrag die Heizung (8) für einen Benutzer irreversibel abgeschaltet und zusätzlich die Zubereitungseinrichtung (2) abgeschaltet wird.

## Claims

1. Method for controlling a hot beverage preparation appliance (2), in particular one for household purposes, having a heater (8), having at least one temperature sensor (10) downstream of the heater (8), having a pump (14) for conveying water within the preparation appliance (2), having a control device (12) for controlling the heater (8) and the pump (14), having the following steps:
a) applying electric power to the heater (8),
b) detecting a temperature change downstream of the heater (8) after a defined time period (b) has passed,
c) evaluating the detected temperature change by comparing it with a target value (z1),
d) outputting an error message or continuing/initiating the brewing operation, **characterised in that** the set electric power applied during a set time period in step a) corresponds to a predetermined amount of energy, which corresponds to a defined target value (z1) according to step c) for a temperature change.

2. Method according to claim 1, **characterised in that** the pump (14) is activated in step a) to fill or vent the heater (8).

3. Method according to claim 1, **characterised in that** a method for filling/venting (FILL) the heater (8) according to claim 2 is initiated after an error message is output in step d).

4. Method according to claim 2 or 3, **characterised in that** after the method for filling/venting (FILL) the heater (8) according to claim 3 a method for cooling (COOL) the heater (8) with the following steps is performed:
k) disconnecting the power supply to the heater (8),
1) detecting a temperature change downstream of the heater (8) after a defined time period (c) has passed,
m) evaluating the detected temperature change by comparing it with a target value,
n) outputting an error message or continuing/initiating the brewing operation.

5. Method according to claim 4, **characterised in that** the power of the pump (14) is changed when the heater (8) is operating without power in step k).

6. Method according to one of the above claims, **characterised in that** for the error message in step d) and/or in step n) information relating thereto is also stored in a nonvolatile memory (16) of the preparation device (2), being accessed at the start of a further method.

7. Method according to one of the above claims, **characterised in that** the current water temperature is detected continuously or at short intervals and the value of the temperature is compared with a defined limit value and if the limit value is exceeded, a fault message is output and the heater is switched off

8. Method according to the above claim 7, **characterised in that** if the limit value is exceeded by a predetermined amount, the heater (8) is switched off irreversibly for a user and the preparation device (2) is also switched off.

## Revendications

1. Procédé pour la commande d'un appareil de préparation de boisson chaude (2), en particulier d'un tel appareil à usage domestique, avec un élément chauffant (8), avec au moins un capteur de température (10) en aval de l'élément chauffant (8), avec une pompe (14) pour l'amenée d'eau à l'intérieur de l'appareil de préparation (2), avec un dispositif de commande (12) pour la commande de l'élément chauffant (8) et de la pompe (8), comportant les étapes suivantes :
a) alimentation de l'élément chauffant (8) en puissance électrique,
b) détection d'une variation de température en aval de l'élément chauffant (8) après écoulement d'un laps de temps défini (b),
c) évaluation de la variation de température détectée par comparaison avec une valeur cible (z1),
d) production d'un message d'erreur ou poursuite/engagement du processus de préparation,
**caractérisé en ce que** la puissance électrique définie appliquée pendant un laps de temps défini dans l'étape a) correspond à une quantité d'énergie prédéfinie qui correspond à une valeur cible déterminée. (z1) selon l'étape c) pour une variation de température.

2. Procédé selon la revendication 1, **caractérisé en ce que** la pompe (14) est activée pour le remplissage ou respectivement la purge de l'élément chauffant (8) dans l'étape a).

3. Procédé selon la revendication 1, **caractérisé en ce qu'**après la production d'un message d'erreur dans l'étape d), un procédé de remplissage/purge (FILL) de l'élément chauffant (8) selon la revendication 2 est engagé.

4. Procédé selon la revendication 2 ou la revendication 3, **caractérisé en ce qu'**après le procédé de remplissage/purge (FILL) de l'élément chauffant (8) selon la revendication 3, un procédé de refroidissement (COOL) de l'élément chauffant (8) comportant les étapes suivantes est mis en oeuvre:
k) coupure du circuit de l'élément chauffant (8),
l) détection d'une variation de température en aval de l'élément chauffant (8) après écoulement d'un laps de temps défini (c),
m) évaluation de la variation de température détectée par comparaison avec une valeur cible,
n) production d'un message d'erreur ou poursuite/engagement du processus de préparation.

5. Procédé selon la revendication 4, **caractérisé en ce que** pendant le fonctionnement avec coupure de circuit de l'élément chauffant (8) dans l'étape k), la puissance de la pompe (14) est modifiée.

6. Procédé selon l'une des revendications précédentes, **caractérisé en ce que** pour le message d'erreur dans l'étape d) et/ou dans l'étape n), une information sur le message, à laquelle il sera accédé au commencement d'un nouveau procédé, est en outre mémorisée dans une mémoire non volatile (16) de l'appareil de préparation (2).

7. Procédé selon l'une des revendications précédentes, **caractérisé en ce que** la température actuelle de l'eau est détectée en continu ou à de courts intervalles, et la valeur de la température est comparée à une valeur limite définie, et lors du dépassement de la valeur limite, un message d'incident est délivré et l'élément de chauffage est déconnecté.

8. Procédé selon la revendication précédente 7, **caractérisé en ce que** lors du dépassement de la valeur limite d'une amplitude prédéfinie, l'élément chauffant (8) est déconnecté de manière irréversible pour un utilisateur et en outre, le dispositif de préparation (2) est déconnecté.
